# EUROPEAN PATENT APPLICATION

(11) **EP 4 064 160 A1**
(43) Date of publication of application: **28.09.2022**
(21) Application number: 22154915.7
(22) Date of filing: 03.02.2022
(51) Int. Cl.: G06Q 20/04, G06Q 20/20, G07G 5/00

(54) **COMMODITY SALES DATA PROCESSING DEVICE, PORTABLE TERMINAL AND PROGRAM**

(30) Priority: 26.03.2021 JP 2021053506
(71) Applicant: Toshiba TEC Kabushiki Kaisha, Tokyo 141-8562 (JP)
(72) Inventor: Nochi, Masatoshi, Shinagawa-ku, Tokyo 141-8562 (JP)
(74) Representative: Bandpay & Greuter

(57) **Abstract**

According to an embodiment, a point-of-sale terminal includes a controller that performs registration processing to register items being purchased by a customer in a sales transaction. The controller also performs payment processing for the sales transaction. The controller determines whether a portable terminal of the customer can receive electronic receipt information that can sent via a near-field communication device or the like. If the portable terminal can receive electronic receipt information sent via near-field communication device or the like, the controller generates electronic receipt information for the sales transaction, then transmit the generated electronic receipt information to the portable terminal using near-field communication or the like.

## Description

### FIELD

Embodiments of disclosed herein relate to a commodity sales data processing device (a point-of-sale terminal), a portable terminal, a program for sales data processing, and a payment system.

### BACKGROUND

In recent years, a payment system that permits electronic payment (cashless payment) for purchases of items has been widely used in retail settings.

In an automatic payment collection device such as disclosed in the related art, a customer who makes a purchase at a vending machine places a personal portable terminal, such as a smartphone or the like, over a card reader of the vending machine to make an electronic payment. Then, an electronic receipt indicating details of the payment can be sent from an electronic receipt management server via the Internet. Therefore, after making the electronic payment, the customer has to startup an application for receiving the electronic receipt to review the electronic receipt, which makes the payment procedure more complicated.

### BRIEF DESCRIPTION OF THE DRAWINGS

FIG. 1 is a block diagram of a payment system according to an embodiment.
FIG. 2 is a block diagram of a hardware configuration of a point-of-sale (POS) terminal.
FIG. 3 is a block diagram of a hardware configuration of a smartphone.
FIG. 4 is a block diagram of a hardware configuration of an electronic receipt management server.
FIG. 5 is a block diagram illustrating certain functional aspects of a POS terminal of an embodiment.
FIG. 6 is a block diagram illustrating certain functional aspects of a smartphone of an embodiment.
FIG. 7 is a block diagram illustrating a certain functional aspects of an electronic receipt management server of an embodiment.
FIG. 8 is a block diagram illustrating certain functional aspects of a payment management server of an embodiment.
FIG. 9 is a flowchart of a process performed by a payment system of an embodiment.
FIG. 10 is a flowchart of a process for determining whether a POS terminal can transmit electronic receipt information to a smartphone.

### DETAILED DESCRIPTION

The invention is set out in the appended set of claims.

In general, certain embodiments provide technological solutions and/or improvements fora commodity sales data processing device, a portable terminal, and related software programs for more easily acquiring and/or providing an electronic receipt related to payments in retail and other transactions.

According to one embodiment, a point-of-sale terminal includes a controller. The controller is configured to perform registration processing to register items being purchased by a customer in a sales transaction. The controller also performs payment processing for the sales transaction. The payment processing is performed according to payment method information provided by a reader/writer device configured to communication with a portable terminal of the customer. The controller next determines whether the portable terminal can receive electronic receipt information that can be sent via the reader/writer device. If the portable terminal is determined to be able to receive electronic receipt information sent via the reader/writer device, the controller is configured to generate electronic receipt information for the sales transaction. The controller then transmits the generated electronic receipt information to the portable terminal via the reader/writer device.

A portable terminal of an embodiment may include a payment instruction unit, a reception unit, and a display control unit. The payment instruction unit permits non-contact communication with a commodity sales data processing device via a reader/writer device to indicate a payment method to the commodity sales data processing device and to execute payment accordingly. The reception unit receives electronic receipt information for a sales transaction from the commodity sales data processing device via a reader/writer device by using non-contact communication. The display control unit displays the electronic receipt received by the reception unit.

### (Example Embodiment)

A payment system 10 according to an example embodiment will be described.

### (Overall Configuration)

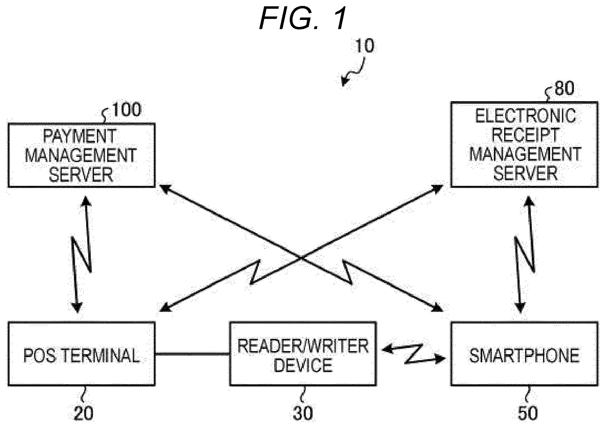

First, the overall configuration of the payment system 10 will be described with reference to FIG. 1.

The payment system 10 includes a POS terminal 20, a smartphone 50, an electronic receipt management server 80, and a payment management server 100.

The POS terminal 20 is provided in a retail store or the like to perform registration processing for registering items to be purchased by a customer and payment processing for receiving payments from the customer for the registered item(s). Note that the POS terminal 20 is an example of a commodity sales data processing device in the present disclosure.

The smartphone 50 is carried by the customer. The customer uses the smartphone 50 to instruct the POS terminal 20 regarding payment method selection and associated payment processing. In addition, the smartphone 50 receives electronic receipt information from the POS terminal 20. The smartphone 50 displays the electronic receipt information. The smartphone 50 is an example of a portable terminal in the present disclosure. In other examples, the portable terminal may be a terminal device other than the smartphone 50, for example, a tablet terminal or the like.

The electronic receipt management server 80 receives and stores the electronic receipt information generated by the POS terminal 20. The electronic receipt management server 80 also receives requests from the smartphone 50 and transmits requested electronic receipt information to the smartphone 50.

The payment management server 100 receives and stores customer information and payment information from the POS terminal. In response to an inquiry from the smartphone 50, the payment management server 100 may also transmit payment history and the like. In some examples, different servers can be provided according to different payment methods. That is, multiple payment management servers 100 may be adopted.

### (Hardware Configuration of POS Terminal)

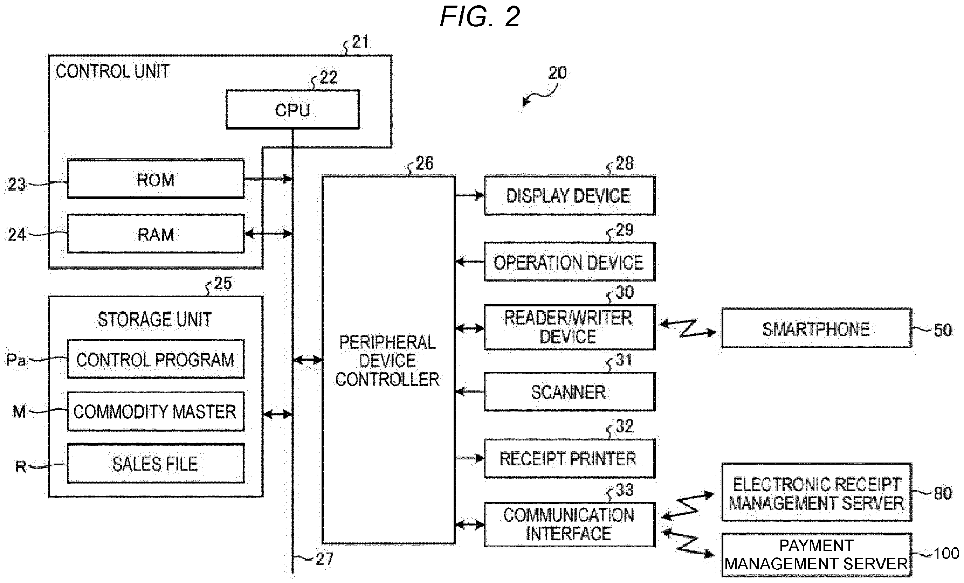

The hardware configuration of the POS terminal 20 will be described with reference to FIG. 2.

The POS terminal 20 includes a Central Processing Unit 22 (CPU), a Read Only Memory 23 (ROM), a Random Access Memory 24 (RAM), a storage unit 25, and the like. The ROM 23 stores various data, tables, and the like. When the CPU 22 performs various processes according to a control program or the like, the RAM 24 serve as a working memory area. The storage unit 25 stores a control program Pa to be executed by the CPU 22. The CPU 22, the ROM 23, the RAM 24, and the storage unit 25 are connected to each other via an internal bus 27. The CPU 22, the ROM 23, and the RAM 24 form a control unit 21 (also referred to as a controller).

The storage unit 25 is a non-volatile memory such as a Hard Disk Drive (HDD), a flash memory, and the like, which retains stored information even when the power is turned off. The storage unit 25 stores a commodity master M and a sales file R, in addition to the control program Pa.

The commodity master M is a table that stores a JAN code (product code) of the items (commodities) available in the store in association with the commodity information such as "commodity name", "commodity unit price", and the like of the items.

The sales file R is a file that stores payment information of the payments processed at the POS terminal 20.

The control unit 21 is connected to a display device 28, an operation device 29 (user input device), a reader/writer device 30, a scanner 31, a receipt printer 32, and a communication interface 33 (which can be collectively referred to as peripheral devices) via the internal bus 27 and a peripheral device controller 26. The peripheral device controller 26 controls the operation of these peripheral devices in response to instructions or commands from the control unit 21.

The display device 28 displays various information output by the POS terminal 20. The display device 28 can be a liquid crystal monitor, an organic EL monitor, and the like, for example.

The operation device 29 receives user inputs as operation instructions to the POS terminal 20. The operation device 29 can be a touch panel, a keyboard, or the like, for example.

The reader/writer device 30 performs non-contact communication (short-range wireless communication) with the smartphone 50 carried by the customer by Near Field communication (NFC), Felica, Bluetooth^{®}, or the like. The reader/writer device 30 receives information related to cashless payments (such as payment method selection, customer identification information, and the like) from the smartphone 50. The reader/writer device 30 can also transmit an electronic receipt to the smartphone 50 if the smartphone 50 can receive the electronic receipt.

The scanner 31 is a device that reads code information such as a barcode, a two-dimensional code, or the like attached to the items being purchased by the customer. The scanner 31 transmits the code information to the control unit 21 of the POS terminal 20. Then, the control unit 21 collates the received code information with the information in the commodity master M to identify the item being purchased by the customer.

When the customer's smartphone 50 cannot receive the electronic receipt information, the receipt printer 32 prints and issues a paper receipt indicating the transaction details.

The communication interface 33 connects the POS terminal 20 to the electronic receipt management server 80 and the payment management server 100 via a communication line.

### (Hardware Configuration of Smartphone)

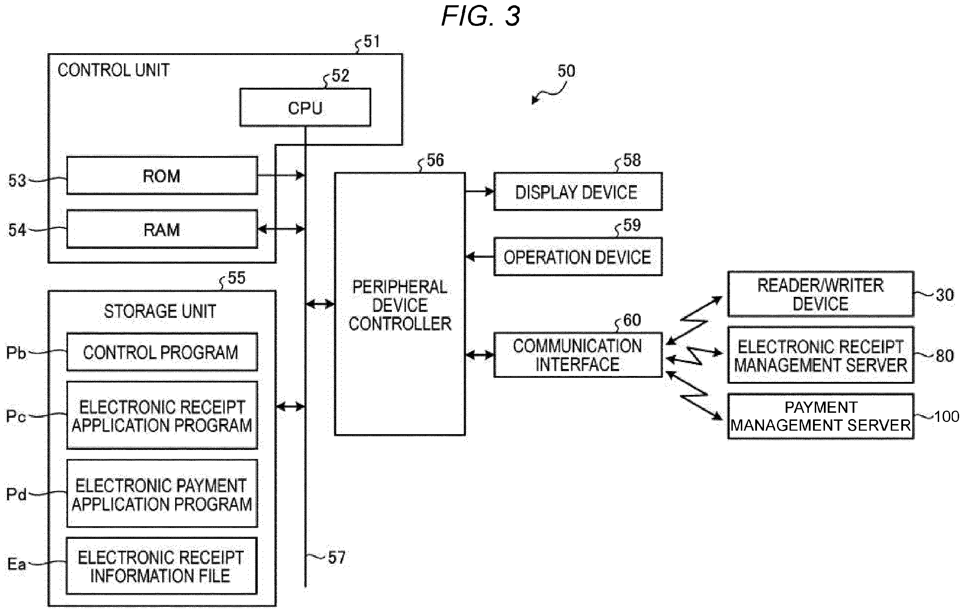

The hardware configuration of the smartphone 50 will be described with reference to FIG. 3.

The smartphone 50 includes a CPU 52, a ROM 53, a RAM 54, a storage unit 55, and the like. The ROM 53 stores various data, tables, and the like. When the CPU 52 performs various processes according to a control program or the like. The RAM 54 serves as a working memory area for CPU 53. The storage unit 55 stores a control program Pb to be executed by the CPU 52. The CPU 52, the ROM 53, the RAM 54, and the storage unit 55 are connected to each other via an internal bus 57. The CPU 52, the ROM 53, and the RAM 54 form a control unit 51.

The storage unit 55 is a non-volatile memory such as HDD, flash memory, or the like, which retains stored information even when the power is turned off. The storage unit 55 stores an electronic receipt application program Pc, an electronic payment application program Pd, and an electronic receipt information file Ea, in addition to the control program Pb.

The electronic receipt application program Pc is an application program for receiving, from the POS terminal 20 or the electronic receipt management server 80, electronic receipt information recording information related to the result of payment process and viewing the same. The user of the smartphone 50 is required to download the electronic receipt application program Pc from a dedicated server or the like and install it on the smartphone 50 in advance. In general, since the electronic receipt application program Pc differs depending on the store that uses the electronic receipt system, a plurality of types of electronic receipt application programs Pc may be installed on the smartphone 50.

The electronic payment application program Pd is an application program for performing electronic payment (cashless payment). The user of the smartphone 50 is required to download the electronic payment application program Pd from a dedicated server or the like and install it on the smartphone 50 in advance. Electronic payments can be broadly classified into prepaid and postpaid methods. Further, even when the form of payment is the same, since different systems are provided depending on the company that provides the electronic payment, in general, a plurality of types of electronic payment application programs Pd may be installed on the smartphone 50.

The electronic receipt information file Ea stores the electronic receipt information received from the POS terminal 20 or the electronic receipt management server 80.

Further, the control unit 51 is connected to a display device 58, an operation device 59, and a communication interface 60, which are collectively referred to as peripheral devices, via the internal bus 57 and a peripheral device controller 56. The peripheral device controller 56 controls the operation of these peripheral devices in response to instructions from the control unit 51.

The display device 58 displays various information output by the smartphone 50. The display device 58 can be a liquid crystal monitor, an organic EL monitor, or the like, for example.

The operation device 59 receives user inputs of operation instructions for the smartphone 50. The operation device 59 can be a touch panel, a keyboard, or the like, for example.

The communication interface 60 connects the smartphone 50 to the electronic receipt management server 80 and the payment management server 100 via a communication line. Further, the communication interface 60 connects the smartphone 50 to the reader/writer device 30 to enable non-contact communication (short-range wireless communication).

### (Hardware Configuration of Electronic Receipt Management Server)

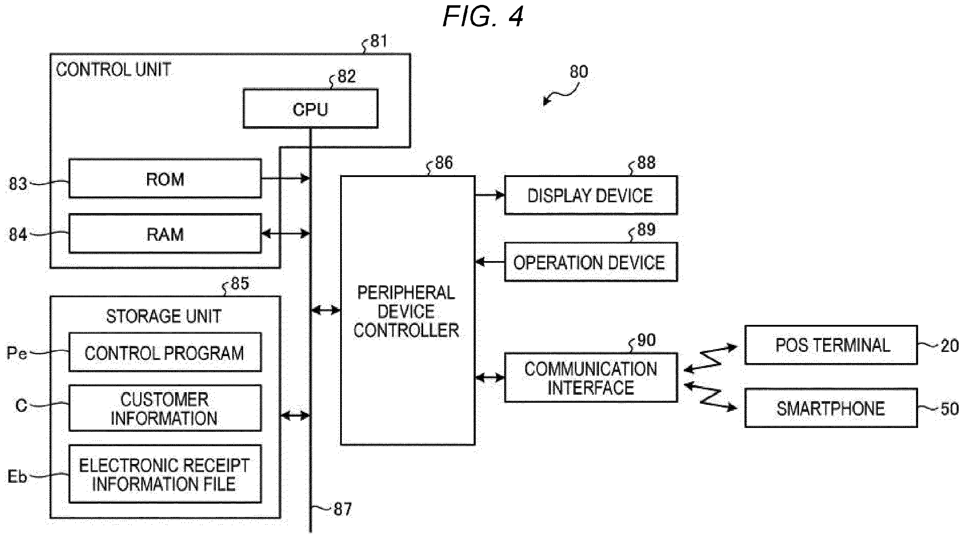

The hardware configuration of the electronic receipt management server 80 will be described with reference to FIG. 4.

The electronic receipt management server 80 includes a CPU 82, a ROM 83, a RAM 84, a storage unit 85, and the like. The ROM 83 stores various data, tables, and the like. When the CPU 82 performs various processes, the RAM 84 serves as a working memory area. The storage unit 85 stores a control program Pe to be executed by the CPU 82. The CPU 82, the ROM 83, the RAM 84, and the storage unit 85 are connected to each other via an internal bus 87. The CPU 82, the ROM 83, and the RAM 84 form a control unit 81.

The storage unit 85 is a non-volatile memory such as HDD, flash memory, or the like, which retains stored information even when the power is turned off. The storage unit 85 stores customer information C and an electronic receipt information file Eb, in addition to the control program Pe.

The customer information C is a data file that stores attributes of a customer who has registered to use the electronic receipt application program Pc. The customer attributes include such things as name, gender, age, address for transmission of electronic receipt information, and the like, for example.

The electronic receipt information file Eb is a data file that collects and stores the electronic receipt information issued in the past in association with a customer. In response to a request from the customer, the electronic receipt management server 80 transmits the electronic receipt information that has been previously issued to the customer's smartphone 50. As a result, the customer can check the electronic receipt information issued in the past.

Further, the control unit 81 is connected to a display device 88, an operation device 89, and a communication interface 90, which are collectively referred to as peripheral devices, via the internal bus 87 and a peripheral device controller 86. The peripheral device controller 86 controls the operation of these peripheral devices in response to instructions or commands from the control unit 81.

The display device 88 displays various information output by the electronic receipt management server 80. The display device 88 can be a liquid crystal monitor, an organic EL monitor, or the like, for example.

The operation device 89 receives user inputs as operation instructions for the electronic receipt management server 80. The operation device 89 can be a touch panel, a keyboard, or the like, for example.

The communication interface 90 connects the electronic receipt management server 80 to the POS terminal 20 and the smartphone 50 via a communication line.

The payment management server 100 has a similar hardware configuration as the electronic receipt management server 80 (see FIG. 4). However, the payment management server 100 stores a different control program than control program Pe. Instead of electronic receipt information file Eb, the payment management server 100 stores a payment information file.

The control program of the payment management server 100 is a program file for controlling the overall operation of the payment management server 100.

The payment information file is a data file that accumulates the past payment history in association with a customer (e.g., by customer ID number or the like). In response to the request from the customer, the payment management server 100 transmits the past payment history to the customer's smartphone 50. As a result, the customer can check the past payment history.

### (Functional Configuration of POS Terminal)

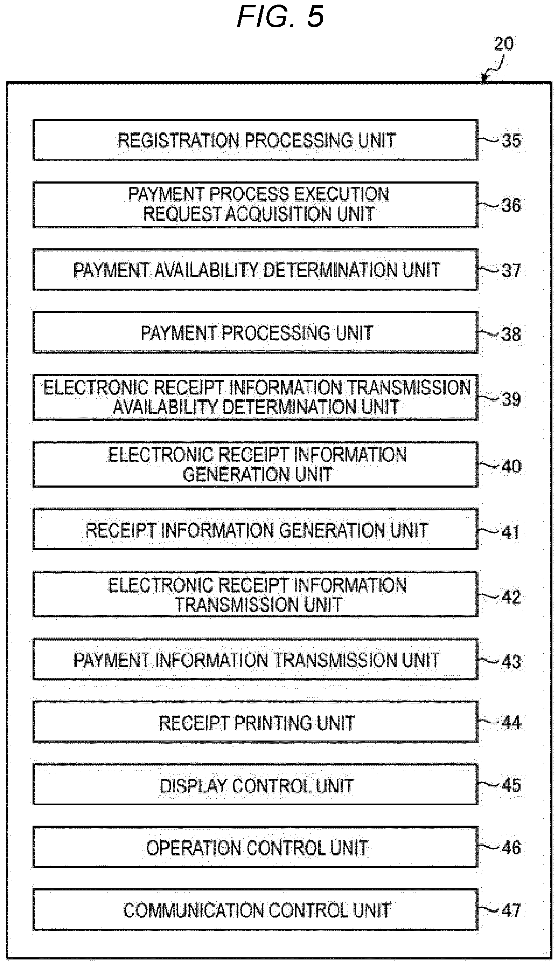

The functional configuration of the POS terminal 20 will be described with reference to FIG. 5.

The control unit 21 of the POS terminal 20 loads the control program Pa into the RAM 24 and operates the same, thereby realizing, as functional units, a registration processing unit 35, a payment process execution request acquisition unit 36, a payment availability determination unit 37, a payment processing unit 38, an electronic receipt information transmission availability determination unit 39, an electronic receipt information generation unit 40, a receipt information generation unit 41, an electronic receipt information transmission unit 42, a payment information transmission unit 43, a receipt printing unit 44, a display control unit 45, an operation control unit 46, and a communication control unit 47, as illustrated in FIG. 5.

The registration processing unit 35 performs a registration process to register the commodity to be purchased by the customer.

The payment process execution request acquisition unit 36 acquires a payment execution instruction from the smartphone 50 carried by the customer.

The payment availability determination unit 37 determines whether or not the payment process can be executed. For example, the payment availability determination unit 37 determines that payment is possible when an amount to pay is less than the balance of electronic money.

The payment processing unit 38 performs payment processing related to payments being made for items registered by the registration processing unit 35, according to payment method information read or otherwise provided from the smartphone 50 via the reader/writer device 30. The payment method information may indicate in some instances that the customer wishes to make payment by cash rather than a cashless payment method and the payment processing unit 38 may also perform processing associated with cash payments.

The electronic receipt information transmission availability determination unit 39 determines whether or not the smartphone 50 can receive the electronic receipt information via the reader/writer device 30. More specifically, the electronic receipt information transmission availability determination unit 39 transmits identification information to the smartphone 50 that uniquely specifies the type of electronic receipt information that can be generated by the electronic receipt information generation unit 40 for transmission to the smartphone 50 via the reader/writer device 30. The electronic receipt information transmission availability determination unit 39 can also receive, via the reader/writer device 30, return information from the smartphone 50 indicating that that the smartphone 50 is capable of receiving electronic receipt information of the specified type via reader/writer device 30. The electronic receipt information transmission availability determination unit 39 can thus determine whether the smartphone 50 can receive electronic receipt information via the reader/writer device 30.

The electronic receipt information generation unit 40 generates electronic receipt information if the smartphone 50 can receive the electronic receipt information.

The receipt information generation unit 41 generates receipt information related to the customer transaction. The receipt information generation unit 41 also generates receipt information associated with cash payment, or for paper receipt printing if the electronic receipt information transmission availability determination unit 39 does not determine that the customer's smartphone 50 can receive the electronic receipt information.

The electronic receipt information transmission unit 42 transmits the electronic receipt information to the smartphone 50 via the reader/writer device 30. In addition, the electronic receipt information transmission unit 42 also transmits the generated electronic receipt information to the electronic receipt management server 80.

The payment information transmission unit 43 transmits the payment information generated in the customer payment process to the payment management server 100.

The receipt printing unit 44 prints and issues receipt information (generated by the receipt information generation unit 41) via the receipt printer 32.

The display control unit 45 generates screen information according to various processes performed by the POS terminal 20 and displays such screen information on the display device 28.

The operation control unit 46 receives various user input operations made at the POS terminal 20 and transmits corresponding information or user inputs to the control unit 21.

The communication control unit 47 controls short-range wireless communication to the smartphone 50 and wireless communication to the electronic receipt management server 80 and the payment management server 100.

### (Functional Configuration of Smartphone)

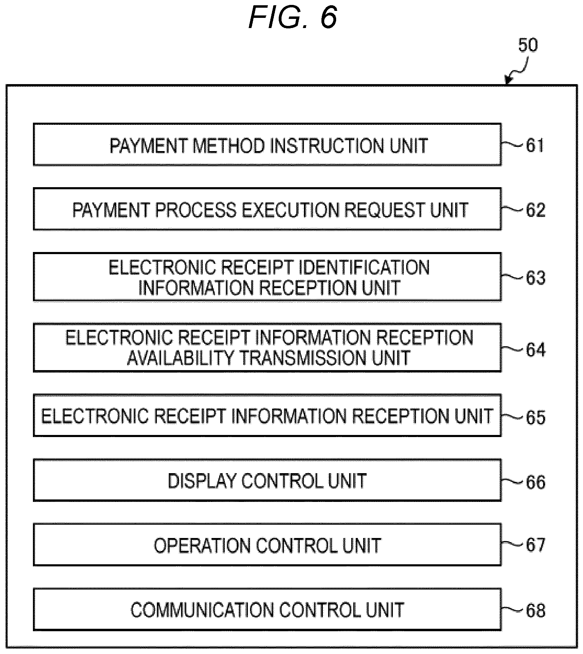

The functional configuration of the smartphone 50 will be described with reference to FIG. 6.

The control unit 51 loads the control program Pb into the RAM 54 thereby realizing, as functional units, a payment method instruction unit 61, a payment process execution request unit 62, an electronic receipt identification information reception unit 63, an electronic receipt information reception availability transmission unit 64, an electronic receipt information reception unit 65, a display control unit 66, an operation control unit 67, and a communication control unit 68, as illustrated in FIG. 6.

The payment method instruction unit 61 performs non-contact communication to instruct the POS terminal 20 regarding payment methods. The payment method instruction unit 61 is also referred to as a payment method selection unit.

The payment process execution request unit 62 performs non-contact communication to execute payments. The payment process execution request unit 62 acquires from the POS terminal 20 information on whether or not a payment process is possible. The payment process execution request unit 62 is also referred to as a payment instruction unit.

The electronic receipt identification information reception unit 63 receives, via the reader/writer device 30, identification information from the POS terminal 20 which uniquely specifies the type of the electronic receipt to be issued by the POS terminal 20.

The electronic receipt information reception availability transmission unit 64 transmits information indicating whether or not the electronic receipt application program Pc is installed on the smartphone 50 and whether or not the electronic receipt application program Pc can receive the electronic receipt to be issued by the POS terminal 20 via the reader/writer device 30.

The electronic receipt information reception unit 65 receives electronic receipt information from the POS terminal 20 via the reader/writer device 30 by using non-contact communication.

The display control unit 66 displays the electronic receipt information on the display device 58. The display control unit 66 generates screen information according to various processes performed by the smartphone 50 and displays such screen information on the display device 58.

The operation control unit 67 acquires various user input operations performed on the smartphone 50 and transmits such user inputs to the control unit 51.

The communication control unit 68 controls short-range wireless communication to the POS terminal 20 and wireless communication to the electronic receipt management server 80 and the payment management server 100.

### (Functional Configuration of Electronic Receipt Management Server)

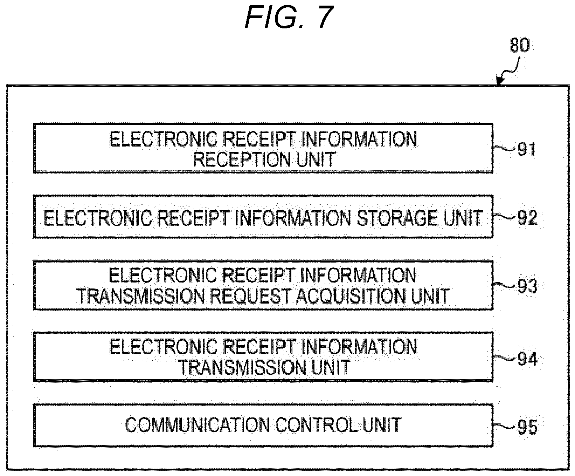

The functional configuration of the electronic receipt management server 80 will be described with reference to FIG. 7.

The control unit 81 of the electronic receipt management server 80 loads the control program Pe into the RAM 84 thereby realizing, as functional units, an electronic receipt information reception unit 91, an electronic receipt information storage unit 92, an electronic receipt information transmission request acquisition unit 93, an electronic receipt information transmission unit 94, and a communication control unit 95, as illustrated in FIG. 7.

The electronic receipt information reception unit 91 receives the electronic receipt information from the POS terminal 20.

The electronic receipt information storage unit 92 stores the electronic receipt information received from the POS terminal 20 in the storage unit 85.

The electronic receipt information transmission request acquisition unit 93 receives an electronic receipt information transmission request from the smartphone 50.

The electronic receipt information transmission unit 94 transmits requested electronic receipt information to the smartphone 50.

The communication control unit 95 controls wireless communication to the smartphone 50.

### (Functional Configuration of Payment Management Server)

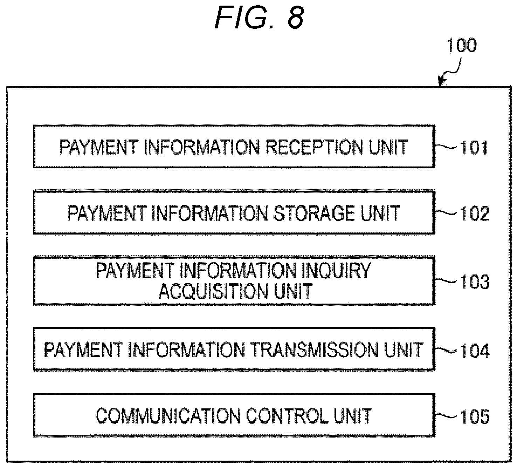

The functional aspects of the payment management server 100 will be described with reference to FIG. 8.

The payment management server 100 loads the control program into the RAM and thereby realizes, as functional units, a payment information reception unit 101, a payment information storage unit 102, a payment information inquiry acquisition unit 103, a payment information transmission unit 104 and a communication control unit 105, as illustrated in FIG. 8.

The payment information reception unit 101 receives the payment information from the POS terminal 20.

The payment information storage unit 102 stores the payment information received from the POS terminal 20 in a storage unit.

The payment information inquiry acquisition unit 103 receives a payment history inquiry from the smartphone 50.

The payment information transmission unit 104 transmits payment history information related to the inquiry to the smartphone 50.

The communication control unit 105 controls wireless communication to the smartphone 50.

### (Flow of Process Performed by Payment System)

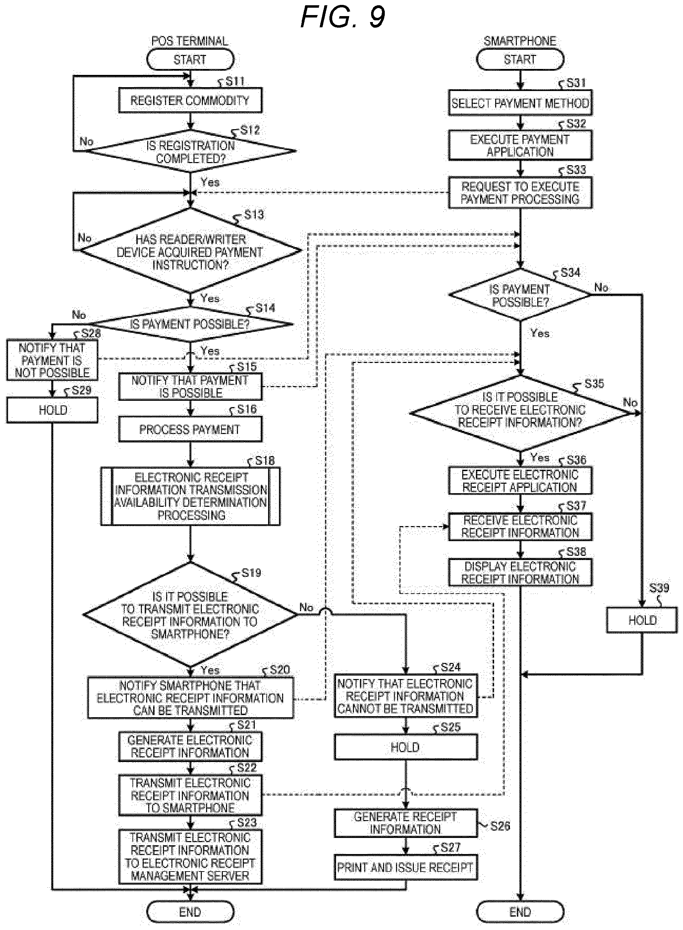

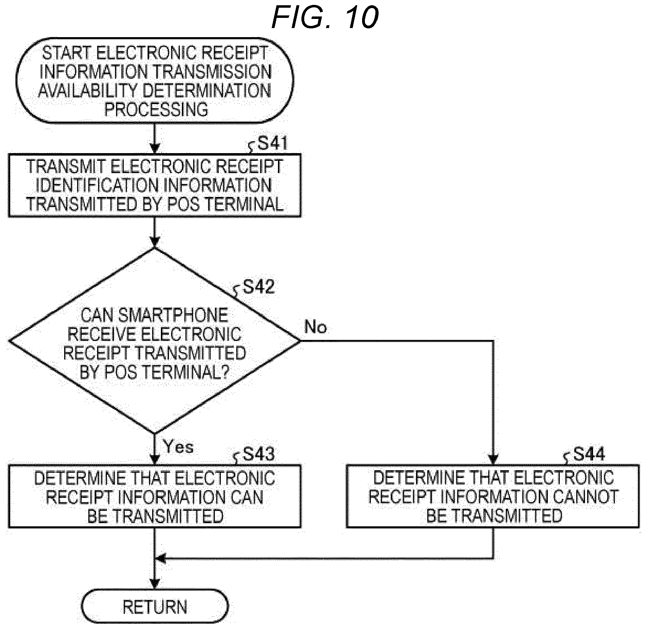

The flow of certain processing performed by the payment system 10 will be described with reference to FIGS. 9 and 10. FIG. 9 is a flowchart of processing performed by the payment system 10 of an embodiment. FIG. 10 is a flowchart of processing for determining whether the POS terminal 20 can transmit electronic receipt information to the smartphone 50.

First, processing performed by the POS terminal 20 will be described. The registration processing unit 35 performs the processing for registering an item (commodity) or items (commodities) to be purchased by the customer (step S11).

The registration processing unit 35 determines whether or not the registration process has been completed (step S12). When it is determined that the registration process is completed (step S12: Yes), the process proceeds to step S13. On the other hand, if the registration process is not yet completed (step S12: No), the process returns to step S11 and the registration process is continued. The completion of the registration process may be determined based on operating of a settlement request key on the POS terminal 20, for example.

After it is determined in step S12 that the registration process is completed, the payment process execution request acquisition unit 36 next determines whether or not a payment instruction has been acquired from the smartphone 50 via the reader/writer device 30 (step S13). When it is determined that the payment instruction has been acquired (step S13: Yes), the process proceeds to step S14. On the other hand, if payment instruction has not been acquired (step S13: No), step S13 is repeated.

After it is determined in step S13 that the payment instruction has been acquired, the payment availability determination unit 37 next determines whether or not payment according to the payment instruction is possible (step S14). If it is determined that the payment is possible (step S14: Yes), the process proceeds to step S15. On the other hand, if the payment according to the payment instruction is not possible (step S14: No), the process proceeds to step S28.

After it is determined in step S14 that the payment is possible, the payment processing unit 38 notifies the smartphone 50 that payment is possible (step S15).

Subsequently, the payment processing unit 38 performs the payment processing for the registered items according to the payment instruction (step S16).

The electronic receipt information transmission availability determination unit 39 then performs an electronic receipt information transmission availability determination process for determining whether or not the electronic receipt information related to the transaction can be transmitted to the smartphone 50 via the reader/writer 30 (step S18). Additional aspects of the electronic receipt information transmission availability determination process will be described below with reference to FIG. 10.

The electronic receipt information transmission availability determination unit 39 receives the result of the electronic receipt information transmission availability determination process and determines whether or not the electronic receipt information can be transmitted to the smartphone 50 (step S19). When it is determined that the electronic receipt information can be transmitted to the smartphone 50 (step S19: Yes), the process proceeds to step S20. On the other hand, if the electronic receipt information can not be transmitted to the smartphone 50 (step S19: No), the process proceeds to step S24.

When it is determined in step S19 that the electronic receipt information can be transmitted to the smartphone 50, the electronic receipt information transmission unit 42 notifies the smartphone 50 via the reader/writer device 30 that the electronic receipt information can be transmitted (step S20).

The electronic receipt information generation unit 40 generates electronic receipt information for the transaction (step S21).

The electronic receipt information transmission unit 42 then transmits the electronic receipt information to the smartphone 50 via the reader/writer device 30 (step S22).

The electronic receipt information transmission unit 42 also transmits the generated electronic receipt information to the electronic receipt management server 80 (step S23). Then, the POS terminal 20 ends the process of FIG. 9.

If it is determined in step S19 that the electronic receipt information can not be transmitted to the smartphone 50, the electronic receipt information transmission unit 42 notifies the smartphone 50 via the reader/writer device 30 that the electronic receipt information cannot be transmitted (step S24).

The display control unit 45 notifies the display device 28 of the POS terminal 20 that the electronic receipt information cannot be transmitted to the smartphone 50 (step S25).

The receipt information generation unit 41 generates receipt information related to the transaction (step S26).

The receipt printing unit 44 prints the generated receipt information using the receipt printer 32 and issues the printed receipt (step S27). Then, the POS terminal 20 ends the process of FIG. 9.

Referring back to step S14, if is determined in step S14 that payment is not possible, the payment processing unit 38 notifies the smartphone 50 that payment is not possible (step S28).

Next, the display control unit 45 notifies the display device 28 of the POS terminal 20 that payment is not possible (step S29) and the transaction is placed in a "hold" state to wait for store clerk intervention or the like. Then, the POS terminal 20 ends the process of FIG. 9. When the payment process cannot be performed according to customer preference/selection, the clerk asks the customer to make a payment using another payment method such as electronic money and the like, or to make a cash payment.

Next, the flow of processing performed by the smartphone 50 will be described. The payment method instruction unit 61 first receives/acquires information related to the payment method that has been selected by the customer (step S31).

The payment process execution request unit 62 executes an electronic payment application program Pd that executes the payment method selected by the customer (step S32).

The payment process execution request unit 62 requests via the reader/writer device 30 for the POS terminal 20 to execute the payment processing(step S33).

The payment process execution request unit 62 determines whether payment processing according to the selected method is possible based on a notification acquired from the POS terminal 20 (step S34). When it is determined that payment process is possible (step S34: Yes), the process proceeds to step S35. On the other hand, if payment process is not possible (step S34: No), the process proceeds to step S38.

After it is determined in step S34 that payment is possible, the electronic receipt identification information reception unit 63 then determines whether or not electronic receipt information can be received from the POS terminal 20(step S35). When it is determined that the electronic receipt information can be received from the POS terminal 20 (step S35: Yes), the process proceeds to step S36. On the other hand, when the electronic receipt information can not be received (step S35: No), the process proceeds to step S38.

After it is determined in step S35 that the electronic receipt information can be received, the electronic receipt identification information reception unit 63 executes the electronic receipt application program Pc (step S36).

The electronic receipt information reception unit 65 then receives the electronic receipt information from the POS terminal 20 via the reader/writer device 30 (step S37).

The display control unit 66 displays the electronic receipt information on the display device 58 of the smartphone 50 (step S38). Then, the smartphone 50 ends the process illustrated in FIG. 9.

If it is determined in step S34 that payment process is not possible, or when it is determined in step S35 that electronic receipt information can not be received, the display control unit 66 notifies the display device 58 of the smartphone 50 that payment is not possible or that electronic receipt information cannot be received (step S39). Then, the smartphone 50 ends the process illustrated in FIG. 9.

Next, the flow of the electronic receipt information transmission availability determination process performed by the electronic receipt information transmission availability determination unit 39 of the POS terminal 20 in step S18 of FIG. 9 will be described with reference to FIG. 10.

The electronic receipt information transmission availability determination unit 39 transmits, to the smartphone 50 via the reader/writer device 30, electronic receipt identification information that uniquely specifies the electronic receipt information type (e.g., format or the like) to be transmitted by the POS terminal 20 (step S41).

Next, the electronic receipt information transmission availability determination unit 39 receives return information transmitted by the electronic receipt information reception availability transmission unit 64 of the smartphone 50, and determines based on the received information whether the smartphone 50 can receive electronic receipts from the POS terminal 20 (step S42). When it is determined that an electronic receipt can be received (step S42: Yes), the process proceeds to step S43. On the other hand, when the electronic receipt information can not be received (step S42: No), the process proceeds to step S44.

When it is determined in step S42 that the electronic receipt information can be received, the electronic receipt information transmission availability determination unit 39 determines that the electronic receipt information can be transmitted to the smartphone 50 (step S43). Then, the process proceeds to step S19 of FIG. 9.

On the other hand, if it is determined in step S42 that the electronic receipt information can not be received, the electronic receipt information transmission availability determination unit 39 determines that the electronic receipt information cannot be transmitted to the smartphone 50 (step S44). Then, the process proceeds to step S19 of FIG. 9.

Although not specifically illustrated in the flowcharts of FIGS. 9 and 10, when the customer requests cash payment, the POS terminal 20 generates receipt information, prints and issues the generated receipt.

As described above, the POS terminal 20 of one embodiment includes the registration processing unit 35 to register the item to be purchased by the customer, the payment processing unit 38 for payment processing based on payment method information read by the reader/writer device 30 from the smartphone 50 (or other portable terminal) carried by the customer, the electronic receipt information transmission availability determination unit 39 that determines whether or not the smartphone 50 can receive an electronic receipt information via the reader/writer device 30, the electronic receipt information generation unit 40 to generate the electronic receipt information if the smartphone 50 is determined to be able to receive the electronic receipt information, and the electronic receipt information transmission unit 42 to transmit the electronic receipt information to the smartphone 50 via the reader/writer device 30. Therefore, when the payment process is performed, the electronic receipt information corresponding to the payment can be more easily acquired. Since the customer does not need to startup the electronic receipt application program Pc, the customer labor can be reduced and the usability of an electronic receipt service and/or application can be improved.

Further, in the POS terminal 20 of one embodiment, the reader/writer device 30 performs short-range wireless communication with the smartphone 50 (or other portable terminal). Therefore, security concerns can be reduced as compared with the case where the electronic receipt information is acquired from the electronic receipt management server 80 using a public line such as a wireless LAN and the like.

In addition, in the POS terminal 20 of one embodiment, the electronic receipt information transmission availability determination unit 39 transmits identification information that uniquely specifies the type of electronic receipt information generated by the electronic receipt information generation unit 40 to the smartphone 50 via the reader/writer device 30, and receives, via the reader/writer device 30, the information from the smartphone 50 confirming that the smartphone can receive the electronic receipt information corresponding to the identification information. Therefore, it is possible to easily check whether the electronic receipt information can be transmitted from the POS terminal 20 to the smartphone 50.

In addition, the smartphone 50 (or other portable terminal) of one embodiment includes the payment process execution request unit 62 (also referred to as a payment instruction unit) that permits non-contact communication with the POS terminal 20 (via the reader/writer device 30 to instruct the POS terminal 20 regarding a payment, the electronic receipt information reception unit 65 receives the electronic receipt information from the POS terminal 20 via the reader/writer device 30 by using non-contact communication, and the display control unit 66 displays the electronic receipt information received by the electronic receipt information reception unit 65. Therefore, the customer who carries the smartphone 50 can more easily acquire electronic receipt information.

Further, the smartphone 50 (or other portable terminal) of one embodiment further includes the payment method instruction unit 61 (also referred to as a payment method selection unit) that permits selection of a payment method for payments to be performed at the POS terminal 20. Therefore, the customer who carries the smartphone 50 can freely select a payment method from among those payment options provided by the electronic payment application program Pd installed on the smartphone 50.

While certain embodiments have been described, these embodiments have been presented by way of example only, and are not intended to limit the scope of the disclosure. Indeed, the novel apparatus and methods described herein may be embodied in a variety of other forms; furthermore, various omissions, substitutions and changes in the form of the apparatus and methods described herein may be made without departing from the scope of the disclosure. The accompanying claims and their equivalents are intended to cover such forms or modifications as would fall within the scope of the disclosure.

## Claims

1. A point-of-sale terminal for use in a payment system comprising a reader/writer device and a portable terminal of a customer, comprising:
a controller configured to:
perform registration processing to register items being purchased by the customer in a sales transaction;
perform payment processing for the sales transaction, according to payment method information provided by the reader/writer device configured to communicate with the portable terminal of the customer;
determine whether the portable terminal can receive electronic receipt information sent via the reader/writer device;
if the portable terminal is determined to be able to receive electronic receipt information sent via the reader/writer device, generate electronic receipt information for the sales transaction; and
transmit the generated electronic receipt information to the portable terminal via the reader/writer device.

2. The point-of-sale terminal according to claim 1, wherein the controller is further configured to:
transmit information via the reader/writer device to the portable terminal indicating a transmittable type of electronic receipt information,
receive, via the reader/writer device, a return response from the portable terminal indicating whether the portable terminal can receive the transmittable type of electronic receipt, and
determine whether the portable terminal can receive the electronic receipt information sent via reader/writer device based on the return response.

3. The point-of-sale terminal according to claim 1 or 2, wherein the controller includes a central processing unit and a volatile memory.

4. The point-of-sale terminal according to any one of claims 1 to 3, further comprising a receipt printer, wherein the controller is further configured to send receipt information to the receipt printer when it is determined the portable terminal can not receive the electronic receipt information sent via the reader/writer device.

5. The point-of-sale terminal according to any one of claims 1 to 4, further comprising a communication interface, wherein
the payment system further comprises an electronic receipt management server, and
the controller is further configured to transmit electronic receipt information via the communication interface to the electronic receipt management server.

6. The point-of-sale terminal according to any one of claims 1 to 5, further comprising a product scanner configured to read a code symbol on an item being purchased by the customer in the sales transaction, wherein the controller is further configured to register items being purchased by the customer in the sales transaction based on code symbols read by the product scanner.

7. A portable terminal for use in a payment system comprising a reader/writer device and a point-of sales terminal, comprising:
a display screen;
a short-range wireless communication interface; and
a processor configured to:
issue an instruction via the short-range wireless communication interface to the point-of-sale terminal to perform payment processing for a sales transaction;
receive information via the short-range wireless communication interface indicating a transmittable type of electronic receipt information from the reader/writer device,
when the transmittable type can be received via the short-range wireless communication interface, receive electronic receipt information corresponding to the sales transaction from the reader/writer device via the short-range wireless communication interface, and
display the received electronic receipt information on the display screen.

8. The portable terminal according to claim 7, wherein the processor is further configured to display a payment method selection screen on the display screen to permit a user of the portable terminal to select a payment method for the sales transaction.

9. The portable terminal according to claim 7 or 8, further comprising a storage unit configured to store an electronic receipt application program and an electronic receipt information file.

10. The portable terminal according to claim 9, wherein the processor is further configured to store the received electronic receipt information in the electronic receipt information file.

11. A non-transitory computer-readable storage medium storing program instructions which, when executed by a point-of-sale terminal for use in a payment system comprising a reader/writer device and a portable terminal of a customer, causes the point-of-sale terminal to perform a method comprising:
performing registration processing to register items being purchased by the customer in a sales transaction;
performing payment processing for the sales transaction, according to payment method information provided by the reader/writer device configured to communicate with the portable terminal of the customer;
determining whether the portable terminal can receive electronic receipt information sent via the reader/writer device;
if the portable terminal is determined to be able to receive electronic receipt information sent via the reader/writer device, generating electronic receipt information for the sales transaction; and
transmitting the generated electronic receipt information to the portable terminal via the reader/writer device.

12. The non-transitory computer-readable storage medium according to claim 11, the method further comprising:
transmitting information via the reader/writer device to the portable terminal indicating a transmittable type of electronic receipt information, and
receiving, via the reader/writer device, a return response from the portable terminal indicating whether the portable terminal can receive the transmittable type of electronic receipt, wherein
the determination of whether the portable terminal can receive the electronic receipt information sent via reader/writer device is based on the return response.

13. The non-transitory computer-readable storage medium according to claim 11 or 12, wherein the point-of-sale terminal further comprises a receipt printer, the method further comprising:
sending receipt information to the receipt printer when it is determined the portable terminal can not receive the electronic receipt information sent via the reader/writer device.

14. The non-transitory computer-readable storage medium according to any one of claims 11 to 13, wherein the payment system further comprises an electronic receipt management server and the point-of-sale terminal further comprises a communication interface, the method further comprising:
transmitting electronic receipt information, via the communication interface, to the electronic receipt management server.

15. A payment system comprising:
the point-of-sale terminal according to any one of claims 1 to 6;
the reader/writer device; and
the portable terminal according to any one of claims 7 to 10.
